# DEMANDE DE BREVET EUROPEEN

(11) **EP 0 551 028 A1**
(43) Date de publication de la demande: **14.07.1993**
(21) Numéro de dépôt: 92403019.0
(22) Date de dépôt: 09.11.1992
(51) Int. Cl.: F16N 15/00

(54) **Procédé et dispositif de lubrification des surfaces métalliques en contact de pièces en mouvement dans des systèmes mécaniques et ensemble vis-écrou à rouleaux muni d'un tel dispositif de lubrification**

(30) Priorité: 08.11.1991 FR 9113831
(71) Demandeur: NEYRPIC FRAMATOME MECANIQUE, 92400 Courbevoie (FR); TRANSROL, F-73024 Chambéry (FR)
(72) Inventeur: Pradier, François, F-38330 Saint Nazaire Les Eymes (FR); Claret, Patrice, F-38000 Grenoble (FR)
(74) Mandataire: Lanceplaine, Jean-Claude

(57) **Abrégé**

La présente invention a pour objet un procédé de lubrification des surfaces métalliques en contact de pièces en mouvement (1, 2, 5) dans des systèmes mécaniques.

Le procédé consiste à déposer sur une des surfaces métalliques des pièces en mouvement (1, 2, 5) des particules de lubrifiant solide et à former entre les surfaces métalliques desdites pièces une pellicule régénérée de lubrifiant solide.

La présente invention a également pour objet un dispositif de lubrification des surfaces métalliques en contact de pièces en mouvement dans des systèmes mécaniques et un ensemble vis-écrou à rouleaux muni d'un tel dispositif de lubrification.

## Description

La présente invention a pour objet un procédé et un dispositif de lubrification des surfaces métalliques en contact de pièces en mouvement dans des systèmes mécaniques.

La présente invention a également pour objet un ensemble vis-écrou à rouleaux muni d'un tel dispositif de lubrification.

L'industrie utilisa de nombreux systèmes mécaniques qui comportent des surfaces en contact sur des pièces métalliques sollicitées en roulement et/ou en glissement.

Ces systèmes mécaniques ont généralement pour fonction de transformer des mouvements et des efforts, notamment de transformer un mouvement de rotation en translation ou inversement ou de transformer un couple en force ou inversement, avec des puissances élevées, dans un faible volume, avec précision et un bon rendement.

Afin d'éviter une détérioration des surfaces en contact des pièces en mouvement pouvant entraîner l'arrêt du système mécanique, ces systèmes sont le plus souvent lubrifiés avec un lubrifiant constitué par une huile ou une graisse et adapté aux conditions de fonctionnement.

Mais, le domaine d'utilisation de ce type de lubrifiant est limité aux températures supérieures à - 70°C environ.

D'autre part, les huiles et les graisses vieillissent rapidement sous les effets conjugués de la température, du frottement et du milieu ambiant dans lequel fonctionnent les systèmes mécaniques.

Même en procédant à un traitement superficiel des surfaces en contact ou à un revêtement de ces surfaces, l'utilisation des systèmes mécaniques comportant des pièces en mouvement est limité aux caractéristiques des lubrifiants.

De plus, ces inconvénients se révèlent encore plus importants lorsque les systèmes mécaniques sont situés dans un environnement soumis à des variations de températures allant de + 40°C à - 196°C avec des pressions de contact importantes.

En effet, à des températures aussi basses, les lubrifiants industriels connus ne sont plus utilisables.

La présente invention a pour but d'éviter ces inconvénients en proposant un procédé et un dispositif de lubrification adaptables à tous les systèmes mécaniques comportant des pièces en mouvement et qui permettent d'augmenter les performances et la durée de vie de ces systèmes, notamment lorsqu'ils travaillent à des températures particulièrement basses.

La présente invention a pour objet un procédé de lubrification des surfaces métalliques en contact de pièces en mouvement dans des systèmes mécaniques, caractérisé en ce que l'on dépose sur une des surfaces métalliques des pièces en mouvement des particules de lubrifiant solide et on forme entre les surfaces métalliques des pièces en mouvement une pellicule régénérée de lubrifiant solide.

Selon une autre caractéristique de l'invention :
- le lubrifiant solide appartient à la famille des polytétrafluoréthylènes purs ou chargés par exemple de graphite ou de molybdène,
- le lubrifiant solide appartient à la famille des polyéthylènes purs ou chargés par exemple de graphite,
- le lubrifiant solide appartient à la famille des polyamides purs ou chargés par exemple de graphite,
- le lubrifiant solide est du graphite ou du plomb.

La présente invention a également pour objet un dispositif de lubrification des surfaces métalliques en contact de pièces en mouvement dans des systèmes mécaniques, caractérisé en ce qu'il comporte au moins un patin formé à partir d'un lubrifiant solide et maintenu en pression de contact sur une des surfaces métalliques desdites pièces en mouvement pour transformer en continu ledit patin en particules de lubrifiant solide sur les surfaces métalliques en contact à lubrifier.

Selon d'autres caractéristiques de l'invention :
- la surface de contact dudit patin sur la surface métallique de l'une des pièces en mouvement a un profil conjugué ou non conjugué à ladite surface métallique;
- ledit patin est fixe par rapport aux pièces en mouvement;
- ledit patin est solidaire en translation avec l'une des pièces en mouvement;
- ledit patin est solidaire en rotation et en translation avec l'une des pièces en mouvement;
- ledit patin est situé en amont des surfaces métalliques en contact à lubrifier des pièces en mouvement;
- au moins un patin est situé en amont et en aval des surfaces métalliques en contact à lubrifier des pièces en mouvement.

La présente invention a encore pour objet un ensemble vis-écrou à rouleaux comportant un dispositif de lubrification tel que mentionné ci-dessus.

L'invention sera mieux comprise à l'aide de la description qui va suivre donnée uniquement à titre d'exemple et faite en se référant aux dessins annexés, sur lesquels :
- la Figure 1 est une vue schématique en coupe longitudinale d'un ensemble vis-écrou à rouleaux muni d'un dispositif de lubrification selon l'invention;
- la Figure 2 est une vue en coupe selon la ligne 2-2 de la Figure 1;
- la Figure 3 est une vue en coupe selon la ligne 3-3 de la Figure 1.

Dans ce qui suit, la description sera faite en se reportant aux figures qui représentent un ensemble vis-écrou à rouleaux muni du dispositif de lubrification selon l'invention.

L'ensemble vis-écrou à rouleaux est une application préférentielle du dispositif de lubrification selon l'invention, mais ce dispositif peut être ajouté ou intégré à tous les systèmes mécaniques comportant des pièces en mouvement.

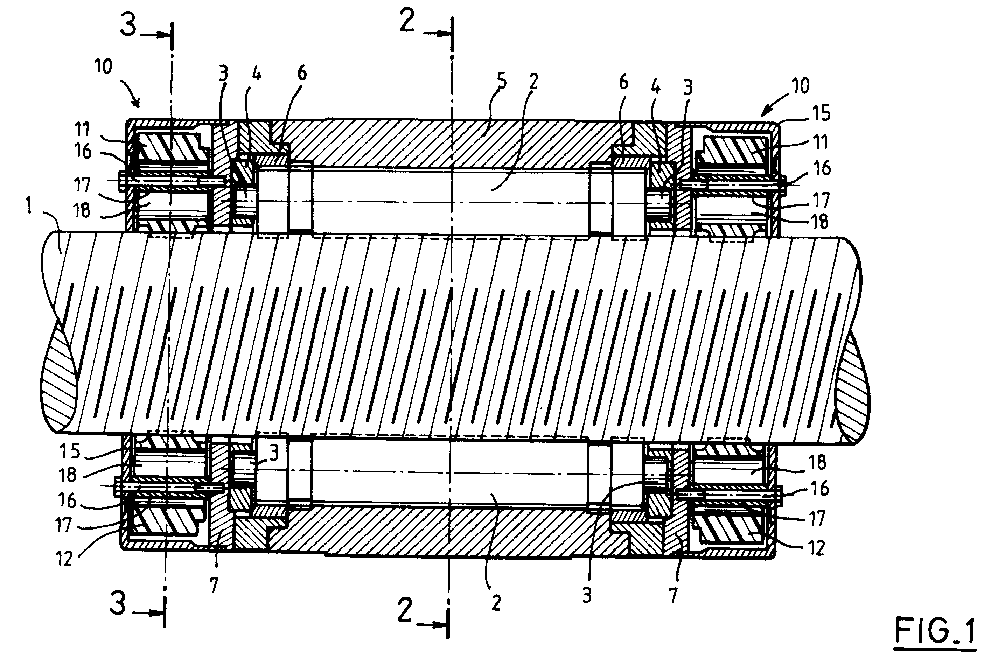

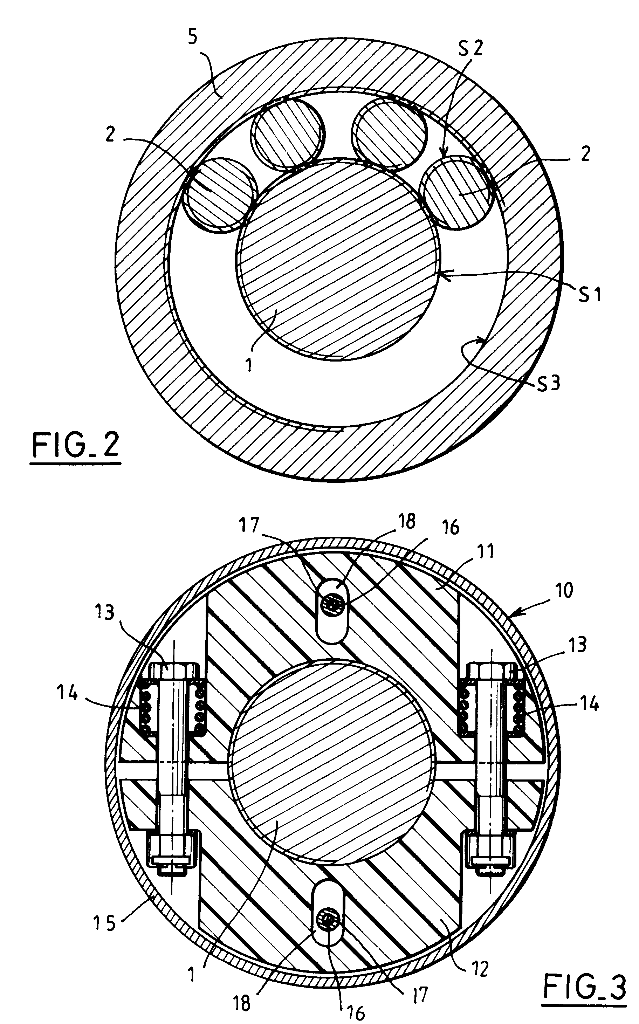

L'ensemble vis-écrou à rouleaux représenté aux Figures 1 et 2 comporte de manière classique, d'une part, une vis 1 à un ou plusieurs filets de section adaptée et entraînée en rotation et, d'autre part, des rouleaux satellites 2 disposés périphériquement à ladite vis 1.

Chaque extrémité des rouleaux satellites 2 comporte un tourillon cylindrique 3.

Ces tourillons cylindriques 3 se logent dans des alésages ménagés dans une couronne 4 prévue de chaque côté des rouleaux satellites 2.

Ces couronnes 4 ont pour fonction de positionner les rouleaux satellites 2 autour de la vis 1 et de les guider dans leur mouvement de rotation autour de leur propre axe et autour de ladite vis 1.

Une douille 5 filetée intérieurement enveloppe les rouleaux satellites 2. La douille 5 et les rouleaux satellites 2 s'engrènent à l'aide d'engrenages 6 situés à leurs extrémités et ayant le même diamètre primitif que les filetages.

Les engrenages 6 assurent un roulement sans aucun glissement entre les rouleaux satellites 2 et la douille 5.

Chaque extrémité de l'ensemble vis-écrou à rouleaux est fermée par un couvercle 7.

Dans ce type de système mécanique, chaque contact entre le filet d'un rouleau satellite 2 et celui de la vis 1 se fait sur une très petite surface avec des pressions élevées. Le roulement des rouleaux satellites 2 sur la vis 1 s'accompagne d'un frottement parasite important dû à des angles d'hélice différents.

Par contre, les contacts entre le filet d'un rouleau satellite 2 et le filet de la douille 5 se font sur des surfaces plus grandes, ce qui entraîne des pressions moins élevées et la roulement s'accompagne d'un frottement beaucoup plus faible.

Ces conditions de fonctionnement imposent une lubrification des surfaces fonctionnelles SI de la vis 1, S2 des rouleaux satellites 2 et S3 de la douille 5 (Figure 2).

Le procédé de lubrification selon la présente invention consiste à déposer sur une des surfaces métalliques des pièces en mouvement par exemple la surface externe de la vis 1, des particules de lubrifiant solide qui remplissent par excès les irrégularités d'usinage de ladite surface métallique et à former entre les surfaces fonctionnelles de la vis 1, des rouleaux satellites 2 et de la douille 5, une pellicule régénérée de lubrifiant solide.

A cet effet, l'ensemble vis-écrou à rouleaux est équipé de deux écrous suiveurs désignés chacun par la référence 10 et situés de part et d'autre de celui-ci.

Chaque écrou suiveur 10 comporte deux patins 11 et 12 formés à partir d'un lubrifiant solide qui sont maintenus en pression de contact sur la surface de la vis 1.

Le lubrifiant solide utilisé peut appartenir:
- à la famille des polytétrafluoréthylènes purs ou chargés par exemple de graphite ou de molybdène,
- à la famille des polyéthylènes purs ou chargés par exemple de graphite,
- à la famille des polyamides purs ou chargés par exemple de graphite.

Le lubrifiant solide peut également être du graphite ou du plomb.

D'une manière générale, la surface de contact de chaque patin 11 et 12 sur la surface de la vis 1 a un profil conjugué ou non conjugué à ladite surface de la vis 1.

Dans l'exemple de réalisation représenté aux Figures 1 et 3, chaque patin 11 et 12 a la forme d'une demi-coquille et est appliqué sur la surface de la vis 1 en exerçant une pression de contact développée par des boulons 13 maintenant les patins 11 et 12 et précontraints à l'aide de ressorts 14 (Figure 3).

Ces ressorts permettent de réaliser avec précision la force d'application des patins 11 et 12 sur la surface de la vis 1 et de les maintenir en contact permanent.

Les patins 11 et 12 sont protégés par un capot 15.

Chaque écrou suiveur 10 est lié en rotation avec l'ensemble vis-écrou à rouleaux par au moins un doigt 16 placé dans une douille 17 et qui traverse le patin 11 ou 12 correspondant par un trou oblong 18.

La pression de contact des patins 11 et 12 sur la surface de la vis 1 et le déplacement relatif desdits patins par rapport à ladite vis provoquent un arrachement de particules de lubrifiant solide qui remplissent par excès les irrégularités d'usinage de la surface de la vis 1 et qui sont transférées de la surface S1 de la vis 1, vers les surfaces S2 des rouleaux satellites 2 et S3 de la douille 5.

L'écrasement et le laminage des particules de lubrifiant solide ainsi que l'imprégnation des surfaces en contact sont réalisés directement par le mouvement de rotation des pièces en présence.

Après un court instant de rotation, les surfaces en contact des pièces en mouvement sont recouvertes d'une pellicule régénérée de lubrifiant solide.

La régénération de la pellicule de lubrifiant solide se fait automatiquement au cours du fonctionnement du système mécanique.

Les patins sont interchangeables et constituent des pièces consommables qui peuvent être changées périodiquement.

D'autre part, un témoin d'usure, non représenté, peut être adjoint au dispositif de lubrification.

D'une manière générale, le dispositif de lubrification selon la présente invention peut être appliqué sur des pièces métalliques sollicitées en roulement et/ou en glissement

Le dispositif de lubrification selon la présente invention peut également être ajouté ou intégré à des systèmes mécaniques connus de guidage en translation (patin de glissement, patin comportant des éléments roulants,...), en rotation (bague, rotule, roulement à billes, butée axiale,..) et/ou de transformation de mouvement (réducteur, multiplicateur de vitesse,...).

Dans ces différentes applications, l'adjonction de patins formés à partir de lubrifiant solide et judicieusement placés permet de former entre les surfaces métalliques des pièces en mouvement une pellicule régénérée de lubrifiant solide grâce au propre mouvement desdites pièces.

La forme et le mouvement relatif des patins sont adaptés à chaque cas spécifique.

Ainsi, le patin peut être fixe, solidaire en translation avec l'une des pièces en mouvement ou solidaire en rotation et an translation avec l'une desdites pièces en mouvement.

Selon le type de système mécanique comportant le dispositif de lubrification selon la présente invention, le patin peut être situé en amont des surfaces métalliques en contact à lubrifier des pièces en mouvement ou, comme pour un ensemble vis-écrou à rouleaux, le dispositif de lubrification peut comporter au moins un patin situé en amont et en aval des surfaces métalliques en contact à lubrifier desdites pièces en mouvement.

L'utilisation d'une'pellicule régénérée de lubrifiant solide entre les pièces en mouvement permet d'utiliser les systèmes mécaniques dans un environnement soumis à des variations de températures allant de + 40°C à - 196°C avec des pressions de contact importantes ce qui n'est pas le cas avec les lubrifiants industriels connus.

Cette pellicule permet de compenser les jeux mécaniques entre les pièces en mouvement et assure le remplissage du jeu constitué par la position relative desdites pièces en mouvement.

De plus, cette pellicule maintient l'espace entre les pièces en mouvement constant de façon à supprimer un contact métallique qui pourrait générer un échauffement des surfaces, un arrachement du métal et une détérioration desdites surfaces en contact pouvant entraîner l'arrêt du système en cours de fonctionnement.

Le dispositif de lubrification selon la présente invention trouve également son application dans des domaines où les lubrifiants connue sont prohibés du fait de l'application de normes de sécurité ou d'hygiène, comme par exemple dans le domaine spatial ou alimentaire.

Le procédé de lubrification selon la présente invention confère au système mécanique ainsi adapté des caractéristiques équivalentes voire supérieures à celles d'une lubrification par des huiles ou des graisses sans en avoir les inconvénients tels que la nécessité de contenir le lubrifiant dans une enceinte étanche comportant des joints d'étanchéité dynamiques et la pollution de l'environnement par les lubrifiants classiques.

Enfin, le procédé de lubrification selon la présente invention peut être appliqué en combinaison avec d'autres traitements de surface tels que par exemple les traitements de durcissement superficiel.

## Revendications

**1 -** Procédé de lubrification des surfaces métalliques en contact de pièces en mouvement (1, 2, 5) dans des systèmes mécaniques, caractérisé en ce qu'on dépose sur une des surfaces métalliques des pièces en mouvement (1, 2, 5) des particules de lubrifiant solide et on forme entre les surfaces métalliques desdites pièces (1, 2, 5) une pellicule régénérée de lubrifiant solide.

**2.** Procédé selon la revendication 1, caractérisé en ce que le lubrifiant solide appartient à la famille des polytétrafluoréthylènes purs ou chargés par exemple de graphite ou de molybdène.

**3.** Procédé selon la revendication 1, caractérisé en ce que le lubrifiant solide appartient à la famille des polyéthylènes purs ou chargés par exemple de graphite.

**4.** Procédé selon la revendication 1, caractérisé en ce que le lubrifiant 'solide appartient à la famille des polyamides purs ou chargés par exemple de graphite.

**5.** Procédé selon la revendication 1, caractérisé en ce que le lubrifiant solide est du graphite.

**6.** Procédé selon la revendication 1, caractérisé en ce que le lubrifiant solide est du plomb.

**7 -** Dispositif de lubrification des surfaces métalliques en contact de pièces en mouvement (1, 2, 5) dans des systèmes mécaniques, caractérisé en qu'il comporte au moins un patin (11, 12) formé à partir d'un lubrifiant solide et maintenu en pression de contact sur une des surfaces métalliques desdites pièces en mouvement (1, 2, 5) pour transformer en continu ledit patin (11, 12) en particules de lubrifiant solide sur les surfaces métalliques en contact à lubrifier.

**8 -** Dispositif selon la revendication 7, caractérisé en ce que la surface de contact dudit patin (11, 12) sur la surface métallique de l'une des pièces en mouvement (1, 2, 5) a un profil conjugué ou non conjugué à ladite surface métallique.

**9 -** Dispositif selon les revendications 7 et 8, caractérisé en ce que ledit patin est fixe par rapport aux pièces en mouvement (1, 2, 5).

**10 -** Dispositif selon les revendications 7 et 8, caractérisé en ce que ledit patin (11, 12) est solidaire en translation avec l'une des pièces en mouvement (1, 2, 5).

**11 -** Dispositif selon les revendications 7 et 8, caractérisé en ce que ledit patin (11, 12) est solidaire en rotation et en translation avec l'une des pièces en mouvement (1, 2, 5).

**12 -** Dispositif selon l'une quelconque des revendications 7 à 11, caractérisé en ce que ledit patin (11, 12) est situé en amont des surfaces métalliques en contact à lubrifier des pièces en mouvement (1, 2, 5).

**13 -** Dispositif selon l'une quelconque des revendications 7 à 11, caractérisé en ce qu'au moins un patin (11, 12) est situé en amont et en aval des surfaces métalliques en contact à lubrifier des pièces en mouvement (1, 2, 5).

**14 -** Ensemble vis-écrou à rouleaux, caractérisé en ce qu'il comporte un dispositif de lubrification selon l'une quelconque des revendications 7 à 13.
